(19) 

**Europäisches Patentamt**
**European Patent Office**
**Office européen des brevets**

(11) **EP 4 374 143 B1**

(12) **EUROPEAN PATENT SPECIFICATION**

(45) Date of publication and mention
of the grant of the patent:
**06.05.2026 Bulletin 2026/19**

(21) Application number: **22758039.6**

(22) Date of filing: **25.07.2022**

(51) International Patent Classification (IPC):
**G01F 1/58** (2006.01)          **G01F 15/00** (2006.01)
**G01F 15/14** (2006.01)

(52) Cooperative Patent Classification (CPC):
**G01F 1/588; G01F 15/006; G01F 15/14**

(86) International application number:
**PCT/IT2022/050216**

(87) International publication number:
**WO 2023/002517 (26.01.2023 Gazette 2023/04)**

(54) **ELECTROMAGNETIC FLOW METER**

ELEKTROMAGNETISCHER DURCHFLUSSMESSER

DÉBITMÈTRE ÉLECTROMAGNÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.07.2021 IT 202100019589**

(43) Date of publication of application:
**29.05.2024 Bulletin 2024/22**

(73) Proprietor: **Euromag International S.r.l.
35010 Villafranca Padovana (PD) (IT)**

(72) Inventor: **FRISO, Ermanno
35128 PADOVA (IT)**

(74) Representative: **Petraz, Gilberto Luigi et al
GLP S.r.l.
Viale Europa Unita, 171
33100 Udine (IT)**

(56) References cited:
JP-B- 3 043 087          US-A1- 2014 230 564
US-A1- 2015 168 188     US-A1- 2021 116 273
US-B2- 8 448 524

## Description

FIELD OF THE INVENTION

The present invention concerns a flow meter for fluids, in particular a meter of the electromagnetic type.

The invention can be used to measure the flow rate of water, conductive liquids in general and suchlike. It is particularly indicated, but not restrictively, for use in applications such as irrigation, low-cost industrial markets and suchlike, in which it may be of interest to reduce the cost of the meter while keeping unchanged its metrological performance and its insensitivity to fluid dynamic disturbances, especially when the flow rates are relatively low. It is also indicated, but not restrictively, for use in applications where better characteristics in terms of bulk and weight may be of interest.

BACKGROUND OF THE INVENTION

Electromagnetic flow meters are known, with a circular or rectangular cross section, typically made of metal materials using traditional metallurgical techniques. Due to the cost of these materials and construction methods, the final cost of the meters that can be made is unsustainable for many applications.

Another disadvantage of electromagnetic flow meters made of metal material is that they require a coating process. In fact, due to the metal structure, the flow tube of the meter has to be coated to achieve the insulation required by the functional principle of the instrument. Moreover, some of the materials, such as for example carbon steel - a preferred metal alloy to keep construction costs down - have to be coated for protection against corrosion.

Coating is an expensive process, and its qualitative result can affect the metrological performance of the meter. Economical coating processes usually result in the production of very thin coatings, which can be subject to abrasion by solid bodies present in the fluid, especially in electromagnetic flow meters with a small cross section.

Electromagnetic flow meters made of polymeric materials are also known. In these cases, the choice of a circular cross section is obligatory, since polymeric materials have a significant limitation with respect to the dimensional stability of cross sections with high pressure and high temperature. Current ducts with a non-circular cross section are not in fact able to withstand the high pressures that the fluid can exert.

For example, given the same area, a duct with a rectangular cross section is less resistant to high pressures than a duct with a circular cross section, in particular on its longer sides. In particular, the increase in the cross section area due to the deformation of the duct can cause errors in measurement: the deformation can therefore affect the metrological performance of the flow meter.

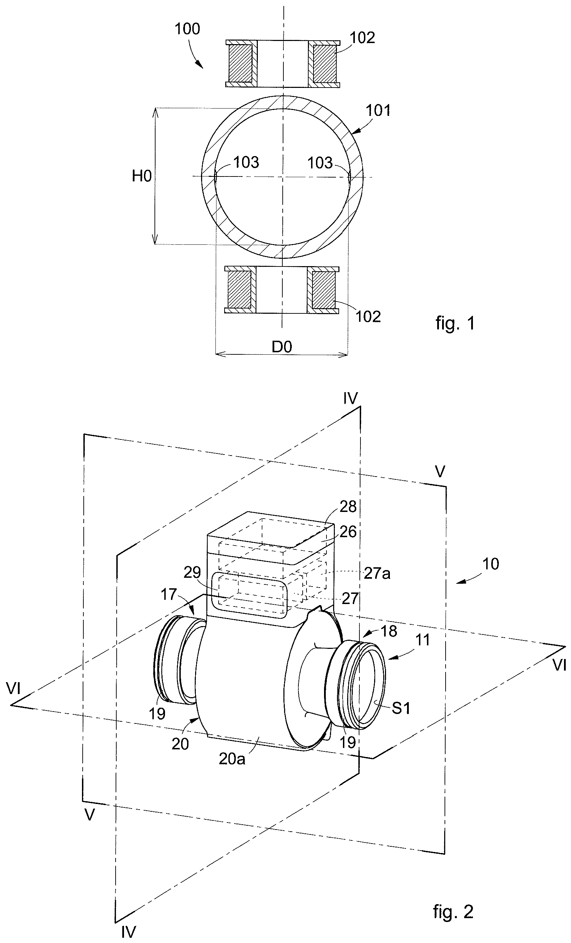

One disadvantage in terms of cost of electromagnetic flow meters with a circular cross section in the size range of interest is that they typically use saddle coils to generate the magnetic induction field, because they optimize the distribution of the field in the ducts of the flow meter. However, the production of saddle coils is difficult to industrialize compared to more common coils, such as solenoid coils, or in any case of the flat type with a circular or quadrangular cross section. The alternative use of solenoid coils 102 in flow meters 100 with a duct that has a circular cross section 101, as shown in fig. 1, can however lead to a deterioration of the metrological performance.

Another disadvantage is that flanges are often used in electromagnetic flow meters in the size range of interest. Flanged type flow meters are very flexible, but the different flange standards available complicate the supply chain and production processes of the product, contributing to increased costs. Furthermore, the metal flanges are very heavy and bulky, in particular during the shipping and transport steps.

The costs and bulk are also increased by the need, often felt, to have external accessories for connection to external supply sources for the electromagnetic meter.

Examples of known flow meters subject to one or more of the disadvantages as above are described in documents US2021/0116273 A1 and US 2015/168188 A1.

There is therefore a need to perfect a flow meter which can overcome at least one of the disadvantages of the state of the art.

In order to do this, it is necessary to solve the technical problem of developing an electromagnetic flow meter with a low cost but high performance.

In particular, one purpose of the present invention is to provide an electromagnetic flow meter which has a low cost, comparable for example to that of mechanical flow meters, and which has high performance in terms of measurement accuracy, in particular in the case of low flow rates.

Another purpose of the present invention is to reduce the bulk and weight of the flow meter as much as possible.

Another purpose of the invention is to provide an electromagnetic flow meter which allows versatility of use and electrical power supply.

The Applicant has devised, tested and embodied the present invention to overcome the shortcomings of the state of the art and to obtain these and other purposes and advantages.

SUMMARY OF THE INVENTION

The present invention is set forth and characterized in the independent claim. The dependent claims describe other characteristics of the present invention or variants to the main inventive idea.

In accordance with the above purposes and in order to resolve the technical problem disclosed above in a new and original way, also achieving considerable advantages compared to the state of the prior art, a flow meter for fluids of the electromagnetic type according to the present invention comprises a sensor element.

The sensor element comprises a duct for the flow of the fluid, a device for generating a magnetic induction field and a detection element comprising a plurality of electrodes.

The device for generating the magnetic induction field comprises at least two coils and a magnetic core comprising a plurality of metal elements.

The duct has, in correspondence with a measurement plane, a rectangular cross section.

This achieves at least the advantage that, with the same area as a duct with a circular cross section, the duct of the present invention has a lower height and a greater width.

The distance between the coils of the device for generating the magnetic induction field can therefore be reduced, allowing to increase the intensity of the magnetic field generated.

Furthermore, a greater width allows to position the measurement electrodes at a greater distance; in this way, the signal-to-noise ratio is higher, improving accuracy, particularly at low flow rates.

In accordance with one aspect of the present invention, the duct has respective inlet and outlet cross sections that have a substantially circular shape.

The rectangular cross section of the duct has a smaller area than the area of the inlet and outlet circular cross sections. This allows to accelerate the flow in the duct, in correspondence with the measurement plane in correspondence with which the generator device and the electrodes are located, and in correspondence with which the measurement is carried out.

This represents an advantage in applications where low flow rate accuracy and insensitivity to disturbances are more important than a high flow rate pressure drop. The signal-to-noise ratio, which also depends on the velocity of the fluid, can in fact be improved, something that is particularly advantageous at low flow rates. At the same time, the acceleration of the flow will have a beneficial effect on the distribution of the velocity of the fluid field, reducing the sensitivity of the flow meter to disturbances due to possible geometric discontinuities/additional devices installed in correspondence with the inlet and/or outlet fittings.

The duct is made of high resistance thermoplastic polymeric material. Advantageously, this allows to reduce material costs and to avoid the process of internal coating of the passage tube, thanks to the intrinsic insulating properties of polymeric materials. In addition, the external anti-corrosive coating is also superfluous, further contributing to the reduction of costs.

As an additional advantage, the possibility of failures due to wear of the insulating coating caused by the abrasion of solid bodies present in the fluid is substantially eliminated.

Advantageously, the polymeric material of the duct can be reinforced with glass fiber and can be of very high stiffness, that is, with an elastic modulus comprised between 10 and 45 GPa.

In fact, thermoplastic materials have a significant limitation as regards the dimensional stability of the cross section at high pressure and at high temperature. Advantageously, by reinforcing the duct, this can be able to withstand the high pressures that the fluid can exert. An increase in the area of the cross section of the duct and the consequent measurement errors can therefore be avoided: the deformation can in fact be kept within acceptable limits that do not affect the metrological performance of the flow meter, over the entire range of operating pressure and temperature.

The flow meter comprises a container for housing the sensor element that has a cylindrical shape, and also a structural matrix disposed between the sensor element and the housing container which completely fills the space present between them. This solution allows to further reduce the deformation of the duct and consequently the measurement errors because the load that the pressure of the fluid exerts on the duct is transferred, through the structural matrix, to the housing container. The cylindrical shape of the housing container is peculiar to allow the effective absorption of the load, together with the high stiffness of the material that it is made of.

The structural matrix is a resin.

In accordance with another aspect of the present invention, the flow meter can comprise at least one stiffening element disposed between the sensor element and the housing container, embedded in the structural matrix. This solution allows to further reduce the deformations of the duct and therefore the measurement errors.

In accordance with another aspect of the present invention, the at least one stiffening element is a cylindrical component coaxial to the housing container.

In accordance with one variant, the at least one stiffening element is a flat component that has undulated contact surfaces.

The solution in which the flow meter comprises the structural matrix, and possibly also one or several stiffening elements, is particularly advantageous and effective especially if the flow meter is large in order to measure flows at high pressure and/or temperature. In fact, the thermoplastic materials that can be used to manufacture the duct have mechanical limits (lower elastic modulus compared to metal materials or plastic materials with carbon filler, the latter however not usable due to the electrical properties of the carbon fillers, not suitable for the application) which could be compensated only by increasing the thicknesses involved. However, this would be problematic both for the molding process and also for the efficiency of the magnetic field generated.

The coils of the device for generating the magnetic induction field can be solenoid type coils, or in any case flat type coils. The configuration of the duct with rectangular cross section in fact allows to use the coils without incurring problems related to the distribution of the magnetic field and thus maintaining the metrological performance of the flow meter. This leads to significant advantages in terms of costs and simplicity of industrialization of the flow meter.

The plurality of electrodes mentioned above comprises at least two measurement electrodes and at least one reference electrode. The electrodes are preferably made entirely of metal material.

Advantageously, the measurement electrodes can each be positioned on one of the shorter sides of the duct, thus maximizing the distance between the electrodes. It is therefore possible to increase, all other factors being equal, the voltage measured on the electrodes and therefore the metrological performance of the flow meter.

The electrodes can be inserted into their position by means of co-molding, that is, they can be introduced during the production process by means of injection molding of the duct. Therefore, the electrodes are incorporated into the thermoplastic material that constitutes the duct. This allows to reduce the production cost of the flow meter.

In accordance with another aspect of the present invention, the flow meter can comprise, disposed inside a same housing container in which the duct, the generator device and the plurality of electrodes are also housed, a supply circuit able to be interfaced with an external electrical energy supply source and an integrated electrical energy supply source, for example a battery.

Advantageously, in this way it is possible to create an electromagnetic flow meter that can be powered both by an integrated supply source and also by an external supply source, without excessively increasing the bulk and weight and without the need for external accessories.

Advantageously, sharing the same housing container for the sensor element as well as the signal processing electronic component, and possibly for the supply source, allows to considerably reduce the bulk and also the overall weight of the flow meter. As an added advantage, it can simplify the flow meter's internal wiring.

The housing container can be made of thermoplastic material, allowing to reduce material costs and also weight.

DESCRIPTION OF THE DRAWINGS

These and other aspects, characteristics and advantages of the present invention will become apparent from the following description of some embodiments, given as a non-restrictive example with reference to the attached drawings wherein:

- fig. 1 is a section view of a detail of a flow meter according to the state of the art;

- fig. 2 is a three-dimensional view of a flow meter according to the present invention;

- fig. 3 is an exploded three-dimensional view of part of the flow meter of fig. 2;

- fig. 4 is a section view of the flow meter of fig. 2 according to the plane IV-IV;

- fig. 4a is an enlarged detail of fig. 4;

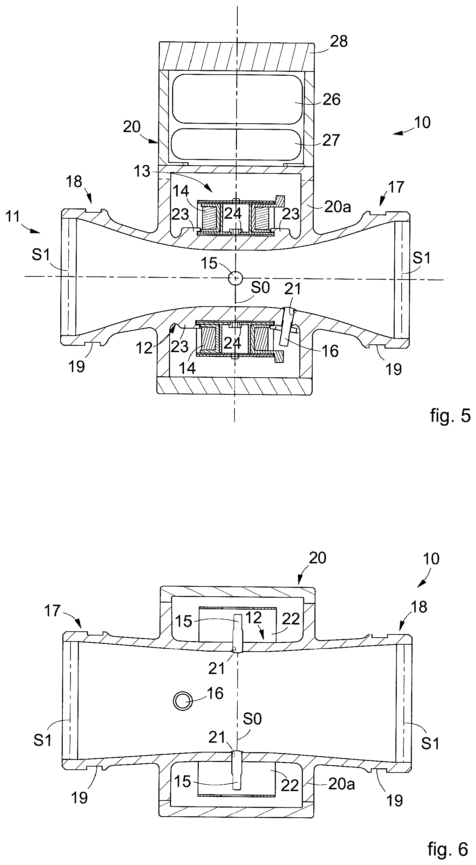

- fig. 5 is a section view of the flow meter of fig. 2 according to the plane V-V;

- fig. 6 is a section view of the flow meter of fig. 2 according to the plane VI-VI;

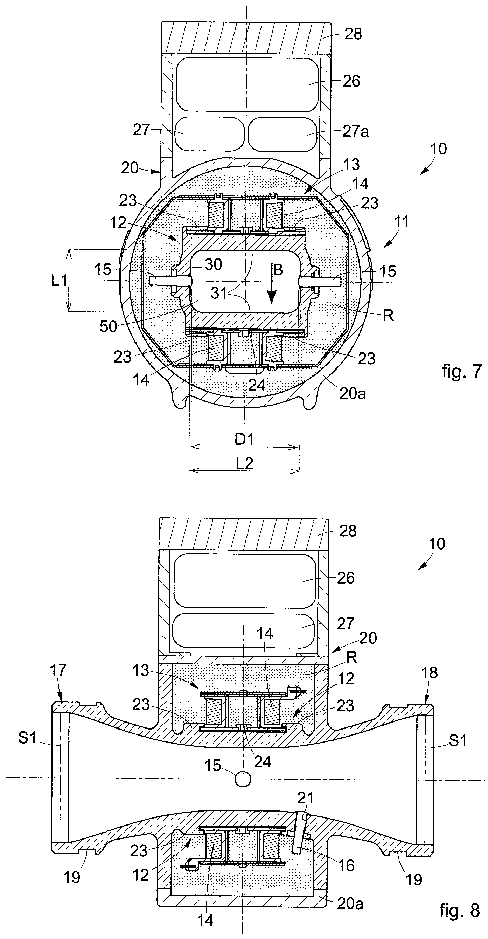

- figs. 7-8 are cross section and longitudinal section views, respectively, of a variant of the flow meter of fig. 2;

- fig. 9 is an exploded three-dimensional view of a variant of the flow meter;

- figs. 10-11 are cross section and longitudinal section views, respectively, of the flow meter of fig. 9;

- fig. 12 is an exploded three-dimensional view of another variant of the flow meter;

- figs. 13-14 are cross section and longitudinal section views, respectively, of the flow meter of fig. 12.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings.

DESCRIPTION OF SOME EMBODIMENTS OF THE PRESENT INVENTION

With reference to figs. from 2 to 14, a flow meter 10 of the electromagnetic type according to the present invention, which can be used to measure the flow rate of fluids, comprises a sensor element 11.

The sensor element 11 is housed in correspondence with a portion of a housing container 20 that has the shape of a tube-shaped element 20a. The tube-shaped element 20a has a circular cross section. Therefore, the housing container 20 has a substantially cylindrical shape, at least in correspondence with the tube-shaped element 20a.

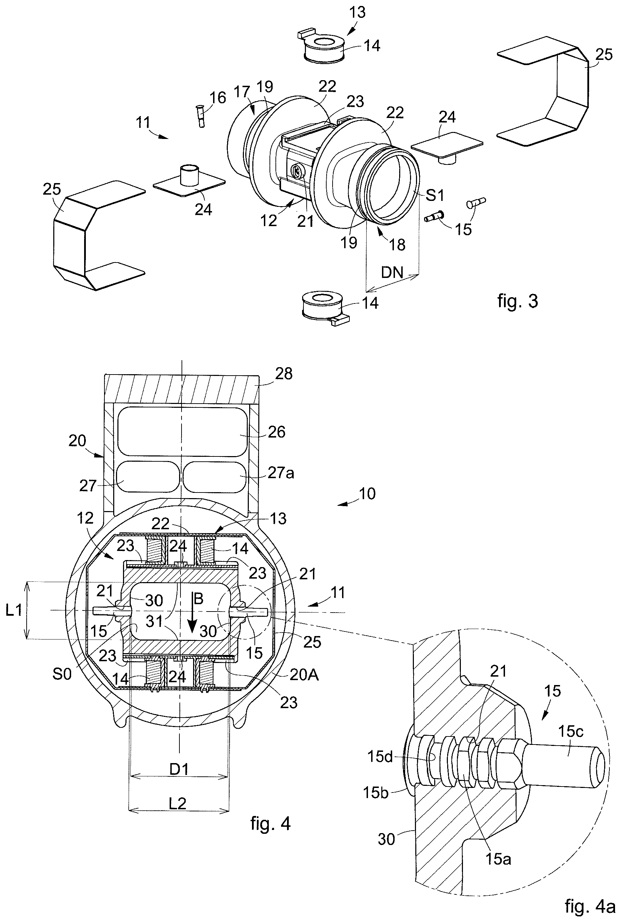

The nominal diameter DN of the flow meter 10, considered in correspondence with a section S1 thereof (fig. 3), can be comprised between 25mm (1") and 300mm (12"), preferably between 50mm (2") and 150mm (6").

The sensor element 11 comprises a duct 12 for the flow of the fluid, a device 13 for generating a magnetic induction field B and a detection element comprising a plurality of electrodes 15,16.

The electrodes 15, 16 are preferably made entirely of metal material.

The generator device 13 comprises at least two coils 14 and a magnetic core consisting of a plurality of metal elements 24, 25.

The use of two coils 14 located symmetrically with respect to the axis of the electrodes 15, 16 allows to obtain a magnetic field that is symmetrical with respect to both axes in the passage section. Solutions with multiple coils, for example four coils, are used in the case of large meters, with the aim of reducing the size of the individual coils. In this case, the coils are generally always disposed symmetrically with respect to the axes of the passage section.

The duct 12 is made of high resistance thermoplastic material, such as acrylonitrile butadiene styrene, polypropylene, polyamide, polyarylamide, polybutylene terephthalate, polyphthalamide, polyethylene terephthalate, polyether ether ketone, polyoxymethylene, polyphenylene oxide, polyphenylene ether, polyparaphenylene sulfide, polycarbonate, polyetherimide, Liquid-crystal polymer, acrylonitrile-styrene, or suchlike.

By the term "high resistance thermoplastic material" we mean a material that maintains its structure both without yielding/breaking and also with limited elastic deformation, at least at the operating pressures of the flow meter and beyond.

In particular, by high resistance thermoplastic material we mean a material with a high stiffness ("elastic modulus", also known by the term "tensile modulus"). A reference range for such stiffness can be 10-15 GPa. Such stiffness value can be an intrinsic characteristic of the material, or it can be achieved by inserting additional fillers into the base material.

The thermoplastic material as above can be reinforced with glass fiber in order to obtain a thermoplastic material with very high stiffness.

By very high stiffness thermoplastic material we mean a material that has an elastic modulus greater than 15GPa, difficult to reach without additional fillers, in this specific case glass fiber. In particular, commercial grades with glass filler reach a maximum of around 28-30GPa.

The percentage of glass fiber with respect to the total material with which the duct 12 is made can be greater than 20%, or even greater than 50%, as a function of the sizes of the sensor element 11 and of the flow meter 10, and of the operating conditions of the flow meter 10, in particular the operating pressure and temperature of the flow.

The duct 12 has a rectangular or substantially rectangular cross section S0, with a height L1 and width L2 which are defined by respective shorter sides 30 and longer sides 31. By section S0 we mean the section of the duct 12 in a substantially central portion thereof, in correspondence with a measurement plane in correspondence with which the generator device 13 and the electrodes 15, 16 are located.

With the same area as a duct with a circular cross section 101 of known meters 100, the height L1 of the duct 12 of the present invention is smaller than the height H0, or diameter, of the duct with a circular cross section 101.

The distance between the coils 14 of the device 13 for generating the magnetic induction field B can therefore be reduced, allowing to increase the intensity of the magnetic induction field B generated. In this way, the signal-to-noise ratio is higher, improving accuracy, particularly at low flow rates.

In fact, the voltage U generated between the measurement electrodes 15 can be expressed as follows:

$$U = k * B * D1 * v \qquad \text{Eq.1}$$

wherein:

k is a proportionality constant;
B is the magnetic induction field generated by the generator device 13;
D1 is the distance between the measurement electrodes 15;
v is the velocity of the fluid.

By decreasing the height L1 of the rectangular cross section S0, the magnetic induction field B generated increases, increasing the voltage U detectable between the measurement electrodes 15.

The increase in the detectable voltage U improves the signal-to-noise ratio. The increase in the signal-to-noise ratio is particularly advantageous for low flow rates of the fluid, for which the signal can become comparable to the noise.

The proportionality ratio between the height L1 and the width L2 of the rectangular cross section S0 of the duct 12 can be comprised between 0.3 and 0.7. Preferably, it is comprised between 0.5 and 0.6.

Advantageously, thanks to the use of suitably reinforced thermoplastic material and a suitable sizing of the height L1 and width L2 of the rectangular cross section S0, it is possible to reach a good compromise between the need to have a reduced height L1 - in order to maximize the magnetic induction field B - and a large width L2 - in order to maximize the distance D1 between the electrodes and therefore the voltage U for the same area of the rectangular cross section S0, and the need to keep the deformation of the section S0 within acceptable limits over the entire operating pressure and temperature range.

For example, thanks to the mechanical properties of the material with which the duct 12 is made, and possibly to the presence of a structural matrix R and of the housing container 20 with a structural function and of stiffening elements 32 according to the invention, at a pressure of 1.6 MPa, the maximum deformation can be kept within a range comprised between 0.1% and 0.4%, that is, within acceptable values in terms of measurement accuracy. This does not mean that there is not the possibility of achieving even smaller deformations of 0.05-0.2%, in order to further increase measurement performances or to be able to work at higher pressures, even of the order of 4 MPa or more, while still guaranteeing optimal measurement performances (that is, deformations of the measurement section in the range indicated above).

The rectangular cross section S0, created for the advantages described above, has a lower resistance than a circular cross section with the same area and made of the same material and with equivalent thicknesses. In particular, a rectangular cross section with a ratio between the sides as described above, subjected to a determinate pressure inside the duct 12, will have an increase in cross section (due to the deformation of the section itself) about 5 times greater than the equivalent circular cross section. It can therefore be stated the that it has a "shape stiffness" that is 5 times lower. In a practical application, this translates into a measurement error 5 times higher than a meter with the same passage section with a circular cross section.

It is therefore imperative that the passage section is equipped with a stiffness such as to keep the deformation within acceptable limits (0.1-0.4%) in all operating conditions.

Achieving this result with thermoplastic materials, even ones that have a high quantity of glass fiber filler, for pipe diameters of the order of 50-150mm, and operating pressures of the order of 16bar, becomes less burdensome with the introduction of the structural matrix R and possibly of the stiffening elements 32, without needing to create thicknesses that would be prohibitive for the injection molding process and would cause the coils 14 to be too far away from the passage section of the flow.

Advantageously, the flow meter 10 of the present invention can also be used for pressure ratings equal to or higher than PN16 (the rating that relates to mechanical components with a maximum internal allowable pressure of 1.6 MPa - 16 Bar).

The duct 12 has respective inlet and outlet apertures that have cross sections S1 of a substantially circular shape, and it has a variable cross section along a longitudinal axis between the inlet and outlet circular cross sections S1, and the rectangular cross section S0 located on the measurement plane.

In correspondence with the measurement plane, the rectangular cross section S0 has a smaller area than the area of the inlet and outlet circular cross sections S1.

According to some embodiments, the ratio between the area of the circular cross sections S1 and the area of the rectangular cross section S0 can be comprised between 1.5 and 3.5.

The velocity v of the flow in the duct 12 in correspondence with the measurement plane can therefore be increased. As reported in the above Eq. 1, by increasing the velocity v of the flow of the fluid, the voltage U detectable between the measurement electrodes 15 increases.

The sensor element 11 can have an inlet fitting 17 and an outlet fitting 18. The inlet and outlet fittings 17, 18 can be made in a single body with the duct 12. The inlet and outlet fittings 17, 18 can be made of the same thermoplastic material with which the duct 12 is made.

The inlet and outlet fittings 17, 18 can comprise a grooved coupling 19. Advantageously, the grooved coupling 19 can allow to use a series of accessories for connection to the pipes equipped with the same connection system, or through flanges or threaded connection. The connection accessories can be easily purchased all over the world and compliant with local regulations, thus avoiding burdening the distribution process and reducing shipping and transport costs.

Advantageously, by using the grooved coupling 19 it is possible to avoid using flanges, allowing to reduce weight and bulk. In this way, by way of example, up to 64 flow meters 10 according to the invention can be stacked in a single Euro-Pallet, instead of up to 18 traditional electromagnetic flow meters, the cross section of the pipes to which the meters can be applied being equal, with a consequent positive environmental impact.

The coils 14 of the device 13 for generating the magnetic induction field B can be solenoid coils or in any case flat coils with circular or quadrangular cross section or suchlike. The coils 14 are preferably flat coils.

The duct 12 can comprise elements 23 for inserting the metal elements of the magnetic core 24.

Each metal element of the magnetic core 24, 25 can be positioned in correspondence with a coil 14. Advantageously, the metal elements of the magnetic core 24, 25 can contribute to optimizing the distribution of the magnetic induction field B in correspondence with the rectangular cross section S0.

The plurality of electrodes 15, 16 can comprise at least two measurement electrodes 15 and at least one reference electrode 16, preferably two measurement electrodes 15 and one reference electrode 16.

The measurement electrodes 15 can each be positioned on one of the shorter sides 30 of the duct 12. The distance D1 between the measurement electrodes 15 is thus maximized. In particular, the distance D1 will be greater than a distance D0 between measurement electrodes 103 of a meter 100 that has a duct with a circular cross section 101 of equal area. As reported in the above Eq. 1, by increasing the distance D1, the voltage U detectable between the measurement electrodes 15 increases.

According to some embodiments, the electrodes 15, 16 are incorporated into the material that constitutes the duct 12.

The duct 12 and the electrodes 15, 16 constitute a single assembly made with the co-molding technique.

The electrodes 15, 16 are conformed in such a way as to guarantee a correct incorporation into the material that constitutes the duct 12.

The electrodes 15, 16 are inserted into the mold before the process of co-molding the duct 12 begins, and they are held in position by the mold itself so that no displacements can occur during the injection phase. In this way, the polymer that the duct 12 is made of, assisted by the pressure exerted during the co-molding process, can incorporate the electrodes 15, 16. An adequate sealing is therefore created between electrodes 15, 16 and duct 12, ideally without the use of additional packings.

With particular reference to the electrode 15 shown in fig. 4a, the electrode has a body 15a, a detection head 15b, facing toward the inside of the duct 12, and an opposite connection terminal 15c facing toward the outside of the duct 12.

The body 15a can have an annular cavity 15d for housing a packing, which can be pre-assembled before the co-molding process, and a labyrinth seal to promote the hydraulic seal between the electrode 15 and the material of the body of the duct 12.

Particular attention has to be paid to the surface finish of the electrode 15, since the surface of the body 15a has to have a sufficiently high and uniform roughness in order to guarantee the grip of the thermoplastic material, while the detection head 15b has to have a mirror finish in order to guarantee a perfect electrical contact with the process fluid.

The packing can be made of an elastomeric material chemically compatible with the polymer used to mold the duct 12. The elastomeric material, when brought to the pressure and temperature conditions of the co-molding process, has the ability to create a chemical bond with the polymer of the duct 12, so as to subsequently guarantee the seal in the various operating conditions.

The connection terminal 15c can have a thread to assemble the electrical wiring.

According to other embodiments, the body 15a can have a non-cylindrical shape, so as to counteract the torque impressed on the electrode 15 during the assembly of the electrical wiring, which otherwise could cause the rotation of the electrode 15 with respect to the body of the duct 12, affecting the hydraulic seal between the two.

The same considerations can also apply to the reference electrode 16.

The flow meter 10 can comprise the housing container 20. The housing container 20 can comprise the tube-shaped element 20a in which the sensor element 11 is housed, in particular in which the duct 12, the generator device 13 and the plurality of electrodes 15, 16 are housed.

The duct 12 can comprise compartments 21 for housing the electrodes 15, 16.

The flow meter 10 can comprise elements 22 for supporting the duct 12 for the sealed coupling of the duct 12 with the housing container 20.

As shown in figs. from 7 to 14, the flow meter 10 comprises a structural matrix R disposed between the sensor element 11 and the housing container 20, completely filling the space between them. The structural matrix R acts as a filling component with the functions described below.

The structural matrix R can be a resin applied with a resining process.

The resin that can be used can be selected from a group comprising a polyurethane, silicone, epoxy resin, with or without the presence of added fillers. The presence of added fillers allows to further increase the stiffness of the resin once solidified, improving the efficiency of the load transfer to the housing container 20.

Advantageously, the preferred resins for this application are polyurethane and epoxy resins.

The stiffness values of the resin, understood as the elastic modulus, are comprised in these indicative ranges:

- polyurethane resins: 0.5-4 GPa,
- epoxy resins: 2-5 GPa,
- filled epoxy resins: 4-8 GPa.

The choice of the resin to use (with the same maximum permissible deformation, that is, maximum permissible measurement error) will depend on the following reference parameters:

- pipe size,
- maximum operating pressure,
- maximum operating temperature.

In addition to having a sealing function with the external environment, the structural matrix R, applied according to the present invention, advantageously allows to increase the resistance of the rectangular cross section S0 because the loads caused by the hydrostatic pressure that the fluid exerts on the internal walls of the duct 12 are distributed on the internal walls of the housing container 20 which, since it is purposely made with a circular support section and suitable material, is stiffer than the duct 12. In particular, the housing container 20, at least the tube-shaped element 20a, is made of a material that has characteristics similar to those of the material that the duct 12 is made of, with an elastic modulus that can also have lower values, for example 8-10 GPa, since the circular cross section is a shape that better resists tensions.

In other words, the structural matrix R acts as a mean for transferring the load from the duct 12 to the housing container 20.

The reduction in deformation that can be achieved with the use of the structural matrix R is of the order of 30-60%, as a function of the type of resin used.

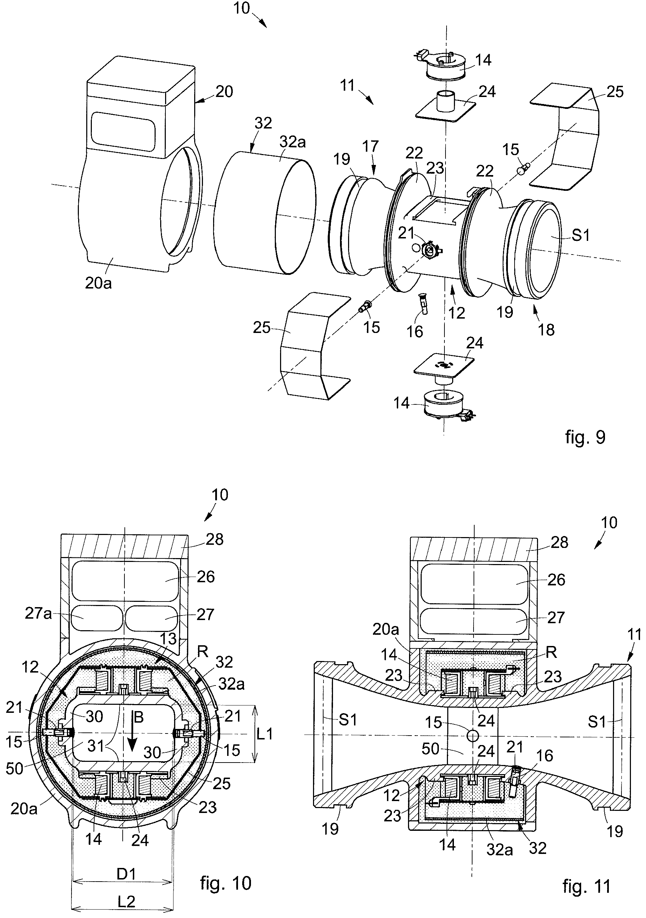

According to other embodiments shown in figs. 9-14, the flow meter 10 comprises at least one stiffening element 32 disposed between the sensor element 11 and the housing container 20 and embedded in the structural matrix R.

The duct 12, the structural matrix R and the at least one stiffening element 32, if present, therefore work in synergy to reduce the deformation of the rectangular cross section S0 compared to the case in which such cross section is left free to deform.

The key condition to achieve the synergy described above is that the structural matrix R covers every interstice and that there are no cavities without resin or air bubbles between the different elements/components of the flow meter 10. This condition can be achieved through a careful constructive design of the interfaces between the different elements/components, and by carefully checking the parameters of the resining process so that the viscosity of the resin is adequate, and the resining time is sufficient to ensure air escapes from the product.

The stiffening element 32 can be favorably made of metal material.

The stiffening element 32 has the function of improving the absorption of the load that is distributed on it, and it does not completely insist only on the housing container 20.

With particular reference to figs. 9-11, the stiffening element 32 is a cylindrical component 32a coaxial with the housing container 20. The cylindrical element 32a can be positioned almost in contact with the internal walls of the housing container 20. Advantageously, between the cylindrical element 32a and the internal walls of the housing container 20 there is a layer of structural element R.

In this case, it is possible to achieve a further reduction in the deformation of the duct 12, compared to the case described above with resin alone, of about 20-30%.

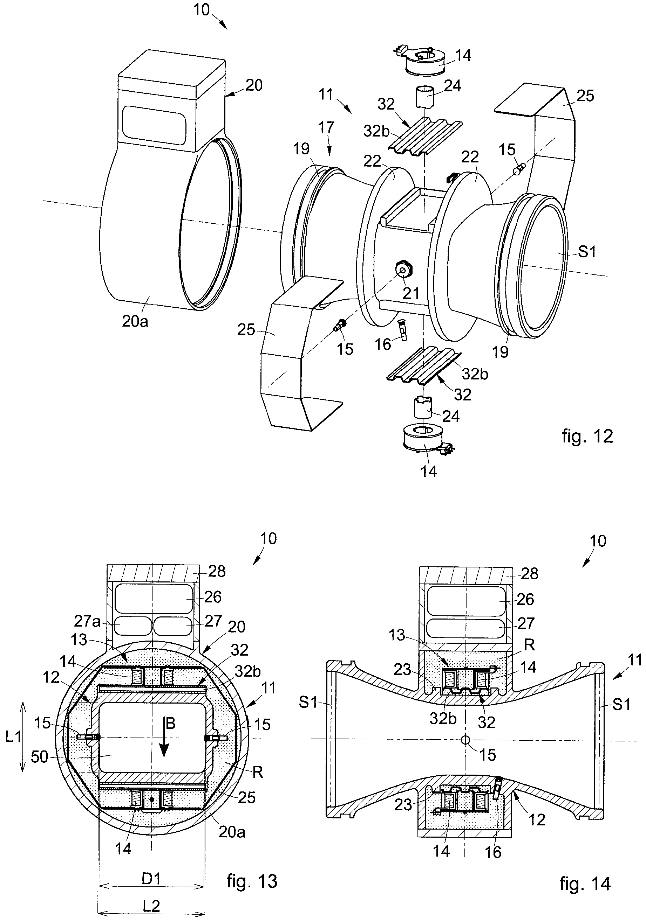

With particular reference to figs. 12-14, the stiffening element 32 comprises two flat components 32b that have undulated or corrugated contact surfaces, for example profiled. The flat component 32b can be associated with the duct 12 in correspondence with the insertion elements 23. The flat component 32b, as well as cooperating in the distribution of the loads toward the structural element R, can perform the function of supporting the coil 14, but also of electromagnetic diffuser, as the flat metal element of the component 24.

This solution allows to obtain a further reduction in the deformation of the duct 12, compared to the case described above with resin alone, of about 8-12%.

The solution in which the flow meter 10 comprises the structural matrix R, and possibly also one or several stiffening elements 32, is particularly advantageous and effective especially in the event the flow meter 10 is large in order to measure flows at high pressure and/or temperature. In fact, the thermoplastic materials that can be used to make the duct 12 have mechanical limits (lower elastic modulus compared to metal materials or plastic materials with carbon filler, the latter however not usable due to the electrical properties of the carbon fillers, not suitable for the application) which could be compensated only by increasing the thicknesses involved. However, this would be problematic both for the molding process and also for the efficiency of the magnetic field generated.

The flow meter 10 can comprise an electronic component 26 for processing the signal.

In a known manner, the electronic component 26 can comprise electronic devices for acquiring, conditioning, saving and/or communicating the signal and/or the processed data.

The electronic component 26 can be integrated in the same housing container 20 in which the duct 12, the generator device 13 and the plurality of electrodes 15, 16 are housed.

The flow meter 10 can comprise at least one integrated electrical energy supply source 27, which is also integrated in the housing container 20. The integrated supply source 27 can be a battery, a buffer battery, a rechargeable battery or suchlike, such as for example a lithium battery pack. The integrated supply source 27 can be connectable to an external supply source.

The flow meter 10 can also comprise a supply circuit 27a for direct interfacing with an electrical energy supply source, integrated 27 and/or external.

The supply circuit 27a can optionally manage both the integrated 27 as well as the external supply source.

In any case, the flow meter 10 is powered without compromises, without reductions in performance or functionality, and maintaining communication with any devices connected to it.

The supply circuit 27a can be able to make the integrated supply source 27 operate as a backup. This can be an advantage in the case of installations where the external supply source is unstable.

Advantageously, by integrating both the electronic component 26 as well as the possible integrated supply source 27 in the housing container 20, the bulk is reduced, and the weight is also reduced, using a smaller amount of material for the construction of the housing containers 20.

The housing container 20 can be made of thermoplastic polymeric material.

The housing container 20 can comprise an element 28 for accessing the electronic component 26, such as a lid, a sliding door or suchlike.

The housing container 20 can comprise a mean 29 for accessing the compartment that contains the supply source 27, such as a lid, a sliding door or suchlike.

It is clear that modifications and/or additions of parts may be made to the flow meter 10 as described heretofore, without departing from the field and scope of the present invention, as defined by the claims.

In the following claims, the sole purpose of the references in brackets is to facilitate reading and they must not be considered as restrictive factors with regard to the field of protection defined by the same claims.

## Claims

1. Electromagnetic flow meter (10) comprising a sensor element (11) which comprises a duct (12) for the flow of a fluid, a device (13) for generating a magnetic induction field (B), comprising at least two coils (14) and a magnetic core comprising a plurality of metal elements (24, 25), and a detection element comprising a plurality of electrodes (15, 16), wherein said duct (12) is made of high resistance thermoplastic material and wherein it has, in correspondence with a measurement plane, a rectangular cross section (S0) that has a smaller area than the area of respective inlet and outlet circular cross sections (S1), **characterized in that** it comprises a container (20) for housing said sensor element (11) which has a cylindrical shape, **in that** it comprises a structural matrix (R) disposed between said sensor element (11) and said housing container (20) completely filling the space present between them, and **in that** said structural matrix (R) is a resin.

2. Flow meter (10) as in claim 1, **characterized in that** said thermoplastic material is reinforced with glass fiber and has very high stiffness with elastic modulus comprised between 10 and 45 GPa.

3. Flow meter (10) as in claim 1, **characterized in that** it comprises at least one stiffening element (32) disposed between said sensor element (11) and said housing container (20), embedded in said structural matrix (R).

4. Flow meter (10) as in claim 3, **characterized in that** said at least one stiffening element (32) is a cylindrical component (32a) coaxial to said housing container (20).

5. Flow meter (10) as in claim 3, **characterized in that** said at least one stiffening element (32) is a flat component (32b) that has undulated contact surfaces.

6. Flow meter (10) as in any claim hereinbefore, **characterized in that** the ratio between the area of the circular cross sections (S1) and the area of the rectangular cross section (S0) is comprised between 1.5 and 3.5.

7. Flow meter (10) as in any claim hereinbefore, **characterized in that** the proportionality ratio between the height (L1) and the width (L2) of said rectangular cross section (S0) is comprised between 0.3 and 0.7, preferably between 0.5 and 0.6.

8. Flow meter (10) as in any claim hereinbefore, **characterized in that** said coils (14) are flat coils or coils of the solenoid type.

9. Flow meter (10) as in any claim hereinbefore, **characterized in that** said plurality of electrodes (15, 16) comprises at least two measurement electrodes (15) and at least one reference electrode (16), **and in that** said electrodes (15) are each positioned on one of the shorter sides (30) of said duct (12).

10. Flow meter (10) as in any claim hereinbefore, **characterized in that** said electrodes (15, 16) are made entirely of metal material and are incorporated into the thermoplastic material which constitutes said duct (12) by means of co-molding techniques during the production process by means of injection molding of the duct (12).

11. Flow meter (10) as in any claim hereinbefore, **characterized in that** it comprises, disposed in said housing container (20), an integrated electrical energy supply source (27) and a supply circuit (27a) which is able to be interfaced directly both with an external electrical energy supply source and also with said integrated electrical energy supply source (27) without any drop in performance.

## Patentansprüche

1. Elektromagnetischer Durchflussmesser (10), mit einem Sensorelement (11), welches eine Leitung (12) für den Durchfluss eines Fluids aufweist, einer Vorrichtung (13) zum Erzeugen eines magnetischen Induktionsfeldes (B), die mindestens zwei Spulen (14) und einen magnetischen Kern mit einer Vielzahl von Metallelementen (24, 25) aufweist, und einem Detektionselement, das eine Vielzahl von Elektroden (15, 16) aufweist, wobei die Leitung (12) aus einem hochohmigen thermoplastischen Material ist und im Bereich einer Messebene einen rechteckigen Querschnitt (SO) hat, dessen Fläche kleiner ist als die Fläche entsprechender kreisförmiger Einlass- und Auslassquerschnitte (S1), **dadurch gekennzeichnet, dass** er einen Gehäusebehälter (20) zur Aufnahme des Sensorelements (11) aufweist, der eine zylindrische Form hat, dass er eine Strukturmatrix (R) aufweist, die zwischen dem Sensorelement (11) und dem Gehäusebehälter (20) angeordnet ist und den zwischen ihnen vorhandenen Raum vollständig ausfüllt, und dass die Strukturmatrix (R) ein Harz ist.

2. Durchflussmesser (10) nach Anspruch 1, **dadurch gekennzeichnet, dass** das thermoplastische Material glasfaserverstärkt ist und eine sehr hohe Steifigkeit mit einem Elastizitätsmodul zwischen 10 und 45 GPa hat.

3. Durchflussmesser (10) nach Anspruch 1, **dadurch gekennzeichnet, dass** er mindestens ein Versteifungselement (32) aufweist, das zwischen dem Sensorelement (11) und dem Gehäusebehälter (20) angeordnet und in die Strukturmatrix (R) eingebettet ist.

4. Durchflussmesser (10) nach Anspruch 3, **dadurch gekennzeichnet, dass** das mindestens eine Versteifungselement (32) eine zylindrische Komponente (32a) ist, die koaxial zu dem Gehäusebehälter (20) angeordnet ist.

5. Durchflussmesser (10) nach Anspruch 3, **dadurch gekennzeichnet, dass** das mindestens eine Versteifungselement (32) eine flache Komponente (32b) ist, die gewellte Kontaktflächen hat.

6. Durchflussmesser (10) nach einem der vorhergehenden Ansprüche, **dadurch gekennzeichnet, dass** das Verhältnis zwischen der Fläche der kreisförmigen Querschnitte (S1) und der Fläche des rechteckigen Querschnitts (SO) zwischen 1.5 und 3.5 liegt.

7. Durchflussmesser (10) nach einem der vorhergehenden Ansprüche, **dadurch gekennzeichnet, dass** das Verhältnis zwischen der Höhe (L1) und der Breite (L2) des rechteckigen Querschnitts (S0) zwischen 0.3 und 0.7, vorzugsweise zwischen 0.5 und 0.6 liegt.

8. Durchflussmesser (10) nach einem der vorhergehenden Ansprüche, **dadurch gekennzeichnet, dass** die Spulen (14) Flachspulen oder Spulen vom Solenoid-Typ sind.

9. Durchflussmesser (10) nach einem der vorhergehenden Ansprüche, **dadurch gekennzeichnet, dass** die Vielzahl von Elektroden (15, 16) mindestens zwei Messelektroden (15) und mindestens eine Referenzelektrode (16) aufweist, und dass die Elektroden (15) jeweils an einer der kürzeren Seiten (30) der Leitung (12) angeordnet sind.

10. Durchflussmesser (10) nach einem der vorhergehenden Ansprüche, **dadurch gekennzeichnet, dass** die Elektroden (15, 16) vollständig aus Metall sind und mittels Co-Molding-Techniken während des Herstellungsprozesses durch Spritzgießen der Leitung (12) in das thermoplastische Material, das die Leitung (12) bildet, eingebettet werden.

11. Durchflussmesser (10) nach einem der vorhergehenden Ansprüche, **dadurch gekennzeichnet, dass** er, in dem Gehäusebehälter (20) angeordnet, eine integrierte elektrische Energiequelle (27) sowie eine Versorgungsschaltung (27a) aufweist, die direkt sowohl mit einer externen elektrischen Energiequelle als auch mit der integrierten elektrischen Energiequelle (27) ohne Leistungseinbußen koppelbar ist.

## Revendications

1. Débitmètre électromagnétique (10) comprenant un élément capteur (11) qui comprend un conduit (12) pour l'écoulement d'un fluide, un dispositif (13) de génération d'un champ d'induction magnétique (B), comprenant au moins deux bobines (14) et un noyau magnétique comprenant une pluralité d'éléments métalliques (24, 25), et un élément de détection comprenant une pluralité d'électrodes (15, 16), lequel conduit (12) est réalisé en matériau thermoplastique à haute résistance et lequel présente, au niveau d'un plan de mesure, une section transversale rectangulaire (S0) qui a une surface inférieure à la surface des sections transversales circulaires d'entrée et de sortie respectives (S1), **caractérisé en ce qu'**il comprend une enceinte (20) pour le logement dudit élément capteur (11) qui a une forme cylindrique, **en ce qu'**il comprend une matrice structurelle (R) disposée entre ledit élément capteur (11) et ladite enceinte de logement (20) remplissant complètement l'espace présent entre eux, et **en ce que** ladite matrice structurelle (R) est une résine.

2. Débitmètre (10) selon la revendication 1, **caractérisé en ce que** ledit matériau thermoplastique est renforcé avec de la fibre de verre et présente une rigidité très élevée avec un module d'élasticité compris entre 10 et 45 GPa.

3. Débitmètre (10) selon la revendication 1, **caractérisé en ce qu'**il comprend au moins un élément de renforcement (32) disposé entre ledit élément capteur (11) et ladite enceinte de logement (20), noyé dans ladite matrice structurelle (R).

4. Débitmètre (10) selon la revendication 3, **caractérisé en ce que** ledit au moins un élément de renforcement (32) est un composant cylindrique (32a) coaxial à ladite enceinte de logement (20).

5. Débitmètre (10) selon la revendication 3, **caractérisé en ce que** ledit au moins un élément de renforcement (32) est un composant plat (32b) qui présente des surfaces de contact ondulées.

6. Débitmètre (10) selon l'une quelconque des revendications précédentes, **caractérisé en ce que** le rapport entre la surface des sections transversales circulaires (S1) et la surface de la section transversale rectangulaire (S0) est compris entre 1.5 et 3.5.

7. Débitmètre (10) selon l'une quelconque des revendications précédentes, **caractérisé en ce que** le rapport de proportionnalité entre la hauteur (L1) et la largeur (L2) de ladite section transversale rectangulaire (S0) est compris entre 0.3 et 0.7, de préférence entre 0.5 et 0.6.

8. Débitmètre (10) selon l'une quelconque des revendications précédentes, **caractérisé en ce que** lesdites bobines (14) sont des bobines plates ou des bobines de type solénoïde.

9. Débitmètre (10) selon l'une quelconque des revendications précédentes, **caractérisé en ce que** ladite pluralité d'électrodes (15, 16) comprend au moins deux électrodes de mesure (15) et au moins une électrode de référence (16), et **en ce que** lesdites électrodes (15) sont chacune positionnées sur l'un des côtés courts (30) dudit conduit (12).

10. Débitmètre (10) selon l'une quelconque des revendications précédentes, **caractérisé en ce que** lesdites électrodes (15, 16) sont entièrement réalisées en matériau métallique et sont incorporées dans le matériau thermoplastique qui constitue ledit conduit (12) au moyen de techniques de surmoulage lors du procédé de production par moulage par injection du conduit (12).

11. Débitmètre (10) selon l'une quelconque des revendications précédentes, **caractérisé en ce qu'**il comprend, disposés dans ladite enceinte de logement (20), une source d'alimentation électrique intégrée (27) et un circuit d'alimentation (27a) qui est apte à être interfacé directement à la fois avec une source d'alimentation électrique externe et également avec ladite source d'alimentation électrique intégrée (27) sans aucune perte de performance.

fig. 1

fig. 2

fig. 3

fig. 4

fig. 4a

fig. 5

fig. 6

fig. 7

fig. 8

fig. 9

fig. 10

fig. 11

fig. 12

fig. 13

fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210116273 A1

- US 2015168188 A1